# EUROPÄISCHE PATENTSCHRIFT

(11) **EP 2 494 188 B1**
(45) Veröffentlichungstag und Bekanntmachung des Hinweises auf die Patenterteilung: **03.07.2013**
(21) Anmeldenummer: 10757038.4
(22) Anmeldetag: 15.09.2010
(51) Int. Cl.: F03D 1/00, F03D 11/04, E02D 27/52, E04H 12/22, F03B 13/26, E02D 27/42

(54) **VERFAHREN FÜR DIE ERSTELLUNG EINES STRÖMUNGSKRAFTWERKS**
METHOD FOR THE CONSTRUCTION OF A FLUID STREAM POWER PLANT
PROCÉDÉ DE CONSTRUCTION D'UNE CENTRALE HYDROCINÉTIQUE

(30) Priorität: 30.10.2009 DE 102009051425
(43) Veröffentlichungstag der Anmeldung: 05.09.2012
(73) Patentinhaber: Voith Patent GmbH, 89522 Heidenheim (DE)
(72) Erfinder: PERNER, Norman, 89233 Neu-Ulm (DE); MAIER, Wolfgang, 89564 Nattheim (DE); SAUER, Alexander, 89522 Heidenheim (DE); HOLSTEIN, Benjamin, 89518 Heidenheim (DE)
(74) Vertreter: Dr. Weitzel & Partner
(86) Internationale Anmeldenummer: PCT/EP2010/005655
(87) Internationale Veröffentlichungsnummer: WO 2011/050882

(56) Entgegenhaltungen:
- WO-A1-03/098038
- WO-A1-2004/015207
- DE-A1- 10 239 278
- DE-A1-102008 000 382
- GB-A- 2 394 498
- US-A- 5 213 470

## Beschreibung

Die Erfindung betrifft ein Verfahren für die Erstellung eines Strömungskraftwerks.

Die vorliegend behandelten Strömungskraftwerke werden von einem Fließgewässer oder einer Luft- oder Gezeitenströmung angetrieben. Dabei sind Windkraftanlagen und konzeptionell entsprechend ausgebildete Gezeitenkraftwerke bekannt. Für eine typische Bauform läuft eine propellerförmige Turbine mit horizontaler Drehachse an einer Maschinengondel um, in der sich ein von der Turbinenwelle angetriebener elektrischer Generator befindet. Die Maschinengondel wird auf einem Turm über einer Gründungsstruktur errichtet. Abwandlungen stellen Vertikalachsrotoren, z.B. Darrieus-Rotoren, dar. Ferner können insbesondere zur Ausnutzung langsamer Gezeitenströmungen Turbinen in einem Mantelgehäuse mit der Wirkung einer Venturi-Düse untergebracht sein und über einen radial äußeren Tragring gelagert werden. Derartige Anlagen stellen für die vorliegende Anmeldung berücksichtigte Varianten gattungsgemäßer Strömungskraftwerke dar.

Die Errichtung großbauender Wind- oder Gezeitenkraftwerke ist insbesondere für einen Offshore-Standort mit einer versenkten Gründungsstruktur eine Herausforderung. Eine der Schwierigkeiten betrifft die Zentrierung der Gründungsstruktur, um, wie durch die EP 1 366 287 B1 beschrieben, eine Maschinengondel so an einer Kopplungsvorrichtung auf die Gründungsstruktur abzusetzen, dass die Rotationsachse der Turbine in einem vorbestimmten Betriebsbereich liegt. Werden Fundamente zur Ausbildung der Gründungsstruktur vor Ort gegossen, kann die Zentrierung nicht immer mit der geforderten Präzision sichergestellt werden. Dies ist umso mehr der Fall, wenn in Trockendocks vorgefertigte Fertigbetonteile zur Ausbildung der Gründungsstruktur am Installationsort versenkt werden. Auch bei einer sorgfältigen Seebettvorbereitung besteht vielfach die Notwendigkeit einer Zentrierungskorrektur.

Für eine Monopilegründung wird zunächst am Installationsort eine pfahlartige Struktur, meist ein Stahlrohr, in den Boden gerammt. Üblicherweise tritt dabei ein Zentrierungsfehler auf, sodass zur Vertikalausrichtung ein äußeres Rohr mit größerem Durchmesser aufgesteckt und ausgerichtet wird. Der Zwischenraum zwischen dem eingerammten Pfahl und dem Außenrohr wird nachfolgend auszementiert, um eine sogenannte Grout-Verbindung herzustellen. Nachteilig an dieser Gründungsvariante ist ein hoher Installationsaufwand. Des Weiteren sind für großbauende Strömungskraftwerke üblicherweise mehrere Monopiles notwendig, auf die dann eine Tragplattform errichtet wird.

Eine kostengünstige Alternative zur Ausbildung einer Gründungsstruktur stellen Schwerkraftfundamente aus Beton dar. Diese lassen sich als Ganzes oder als Teilkomponenten dockseitig vorfertigen und können als schwimmfähige Einheiten zum Installationsort geschleppt und dort versenkt werden. Zur Korrektur einer Schiefstellung einer solchen Gründungsstruktur werden durch die DE 10 2008 000 382 A1 Korrekturelemente vorgeschlagen, die jeweils aus einer paarweisen Abfolge zylindrischer Elemente mit schräg angeschnittenen Kontaktflächen bestehen. Durch ein Verdrehen zweier aufeinander folgender Elemente entsteht ein Knick in der Stapelfolge, durch den es möglich ist, die Längsachse des Stapels gegenüber der Vertikalen zu zentrieren. Nachteilig an diesem Ansatz ist, dass am Installationsort auf dem Meeresboden die notwendige relative Positionierung der Korrekturkörper ausgeführt werden muss. Des Weiteren ist deren Lage sicher zu fixieren, was sich jedoch aufgrund der schief angelegten Kontaktflächen und der daraus folgenden elliptischen Umrandungen der Korrekturkörper schwierig gestaltet.

Des Weiteren wird durch die WO 2007/083105 A1 das Absetzen einer Gründungsstruktur auf dem Meeresboden für ein Gezeitenkraftwerk beschrieben, wobei am Fundament Hebewerke zur zentrischen Ausrichtung vorgesehen sind. Ein solcher Ansatz erhöht jedoch die Komplexität der Installation. Des Weiteren werden im Bereich der Hebewerke auf das Fundament punktuelle Belastungen erzeugt, für die die Gründungsstruktur ausgelegt werden muss. Ein weiteres Problem besteht darin, dass im Laufe der Zeit die Abstützungspunkte des Fundaments im Bereich der Hebewerke aufgrund erosiver Prozesse nachgeben, wodurch sich die Lage und Orientierung der Gründungsstruktur verändern kann.

Eine weitere Variante einer Zentrierung eines unteren Turmteils auf einem schräg auf dem Gewässergrund stehenden Dreibein zur Gründung eines Gezeitenkraftwerks wird durch die WO 2004/015207 A1 beschrieben. Nachteilig ist, dass die Korrekturschritte vor Ort auszuführen sind und hierzu gefährliche Taucharbeiten notwendig werden.

Der Erfindung liegt die Aufgabe zugrunde, die voranstehend beschriebenen Schwierigkeiten durch die Angaben eines weiterentwickelten Strömungskraftwerks zu überwinden, wobei auch für eine schief stehende Gründungsstruktur die Rotationsachse der Turbine in einem vorbestimmten Betriebsbereich liegen soll. Das Montageverfahren zur Errichtung einer solchen Anlage soll insbesondere die auszuführenden Installationsschritte vor Ort zeitlich beschränken. Des Weiteren soll eine weitgehend automatisierte Installation möglich sein.

Die der Erfindung zugrunde liegende Aufgabe wird durch die Merkmale des unabhängigen Anspruchs gelöst. Dabei haben die Erfinder erkannt, dass eine Schiefstellung einer am Installationsort abgesetzten oder dort errichteten Gründungsstruktur durch eine individuelle Anpassung, d.h. eine für jede Installation spezifische Ausführung, des darauf aufgesetzten Anlagenteils, im Folgenden als Tragelement bezeichnet, korrigiert werden kann.

Für eine erste Ausführungsvariante der Erfindung erfolgt eine Anpassung des Oberteils der Kopplungsvorrichtung, die Teil des Tragelements ist. Dabei sieht eine vorteilhafte Gestaltung die Ausbildung des Oberteils der Kopplungsvorrichtung als Betonverbundteil vor, wobei ein Kopplungskörper, der vorzugsweise aus einem in Seewasser nicht korrodierenden Metall, beispielsweise Edelstahl, gefertigt ist, mit einer der Ausrichtung des Gegenstücks an der Gründungsstruktur entsprechenden Winkelstellung in eine Schalung eingesetzt und mit Beton umgossen wird.

Für eine zweite Ausführungsvariante der Erfindung wird die individuelle Anpassung des Tragelements an einem von der Kopplungsvorrichtung entfernten Teilbereich ausgeführt. Dies kann beispielsweise die Verbindungsstelle zwischen der Maschinengondel und dem oberen Abschnitt des Stützpfeilers sein. Dabei wird die Längsachse der Maschinengondel, die mit der Rotationsachse der Turbine fluchtet, in einen vorbestimmten Winkel zur Längsachse des oberen Stützpfeilerabschnitts angelegt, der eine Schiefstellung der Gründungsstruktur ausgleicht. Vorteilhafterweise wird das Tragelement als Betonverbundteil ausgebildet, sodass durch eine einstellbare Schalung die gewünschte individuelle Anpassung des Tragelements bewirkt wird.

Beim Absetzten des solchermaßen als Ganzes angepassten Tragelements auf die Gründungsstruktur müssen während der Installation das Oberteil und das Unterteil der Kopplungsvorrichtung einen bestimmten Relativwinkel einnehmen, für den die voranstehend genannte Schiefstellungskorrektur ausgelegt ist. Dieser Winkel wird durch eine Drehsicherung fixiert, die beispielsweise als Vielfachverzahnung am Ober- und Unterteil angelegt ist.

Nachfolgend wird die Erfindung anhand von Ausführungsbeispielen in Verbindung mit Figurendarstellungen genauer erläutert.
- Figur 1: zeigt eine teilangeschnittene Seitenansicht eines Strömungskraftwerks.
- Figur 2: zeigt die Vermessung der Orientierung der Gründungsstruktur zur Ausführung des erfindungsgemäßen Installationsverfahrens.
- Figur 3: zeigt die Herstellung eines individuell angepassten Oberteils der Kopplungsvorrichtung als Betonverbundteil.
- Figur 4: zeigt ein alternatives Ausgestaltungsbeispiel eines Strömungskraftwerks in teilangeschnittener Seitenansicht.

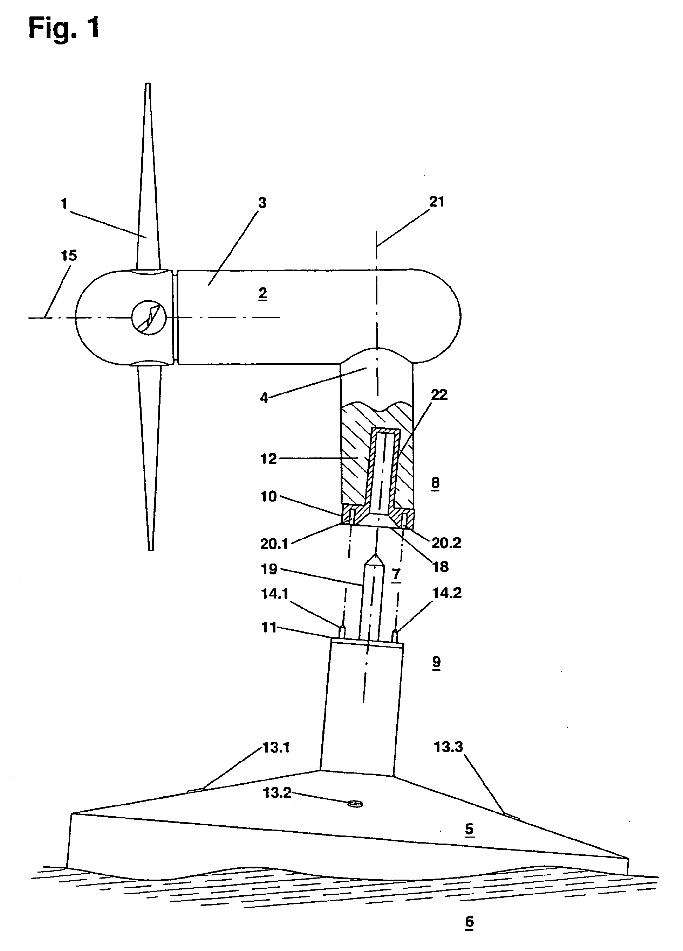

Figur 1 skizziert eine auf einem Gewässergrund 6 abgesetzte Gründungsstruktur 5. Auf diese wird bei der Installation ein Tragelement 2 mit der daran umlaufenden Turbine 1 mittels einer Kopplungsvorrichtung 7 aufgesetzt. Für die dargestellte Ausgestaltung wird eine Turbine mit einer horizontalen Drehachse 15 verwendet. Ferner umfasst für das vorliegende Ausführungsbeispiel das Tragelement 2 eine Maschinengondel 3 und einen oberen Stützpfeilerabschnitt 4. Dabei dient die Maschinengondel 3 der Lagerung der Turbinenwelle sowie der Aufnahme eines im Einzelnen nicht dargestellten elektrischen Generators. Vorliegend wird daher der Begriff eines Tragelements 2 verallgemeinert verwendet. Denkbar sind Ausgestaltungsvarianten, für die das Tragelement 2 mehrteilig angelegt ist. Ferner können Teilkomponenten des Tragelements 2, insbesondere zur Ausbildung eines Azimut-Drehgelenks, relativ zueinander bewegt werden.

Ausgangspunkt der Erfindung ist eine Gründungsstruktur 5 mit Schiefstellung. Hierzu ist in Figur 1 das Unterteil 9 der Kopplungsvorrichtung 7, das der Gründungsstruktur 5 zugerechnet wird, mit einer zur Verdeutlichung übertrieben dargestellten Winkelstellung gegen die Vertikalrichtung 21 dargestellt. Für die Kopplungsfunktion und Ausrichtung ist die Orientierung des Zentrierungszapfens 19 am Unterteil 9 relevant. Erfindungsgemäß ist vorgesehen, das Gegenstück am Oberteil 8 der Kopplungsvorrichtung 7, das dem Tragelement 2 zugeordnet ist, und einen ersten Kopplungskörper 10 mit einer Zentrierungsbuchse 22 umfasst, individuell an diese Schrägstellung anzupassen.

Vorliegend wird von einer formschlüssigen Verbindung zwischen einem ersten Kopplungskörper 10 am Oberteil 8 und eines zweiten Kopplungskörpers 11 am Unterteil 9 ausgegangen. Zusätzlich liegen am ersten Kopplungskörper 10 seitlich der Zentrierungsbuchse 22 zwei Aufnahmen 20.1, 20.2 vor. In diese greifen bei der Ausbildung der Kopplung, d.h. im montierten Zustand der Kopplungsvorrichtung 7, die Sicherungselemente 14.1, 14.2 am zweiten Kopplungskörper 11 des Unterteils 9 ein, die als Drehsicherung dienen. Auch diese werden individuell an die vorgegebene Lage der Sicherungselemente 14.1, 14.2 angepasst.

Ferner weist der erste Kopplungskörper 10 eingangsseitig an der Zentrierbuchse 22 einen konischen Fangbereich 18 auf, sodass der im Endbereich zugespitzte Zentrierungszapfen 19 am zweiten Kopplungskörper 11 des Unterteils 9 bei der Montage sicher eingeführt werden kann. Dabei wird der konische Fangbereich 18 so angelegt, dass bei einer Bewegung des Tragelements 2 parallel zur Achse des Zentrierungszapfens 19 ausgehend von einer Ausgangsstellung in der Nähe der Spitze des Zentrierungszapfens 19 eine formschlüssige Verbindung des Oberteils 8 und des Unterteils 9 der Kopplungsvorrichtung 7 bewirkt wird.

Des Weiteren kann die Erfindung eine alternative Gestaltung für die Kopplungsvorrichtung 7 aufweisen, für die keine formschlüssige Verbindung zwischen dem Oberteil 8 und dem Unterteil 9 vorgesehen ist. Denkbar ist eine Wirkverbindung, die zusätzlich oder alternativ auf einer kraft- und/oder reibschlüssigen Verbindung beruht. Grundsätzlich ist eine Wirkverbindung von Flanschen mit Schraubverbindungen zur Ausbildung der Kopplungsvorrichtung denkbar, soweit Führungen zur Ausrichtung des Oberteils 8 und des Unterteils 9 zur Ausführung der Installation vorliegen. Auch für diesen Fall wird bevorzugt das Oberteil 8 an die nach der Gründung vorliegende Stellung des Unterteils 9 der Kopplungsvorrichtung 7 angepasst. Ferner ist die Wirkverbindung bevorzugt lösbar ausgebildet, sodass das Tragelement 2 mit der Turbine 1 für eine Inspektion geborgen werden kann.

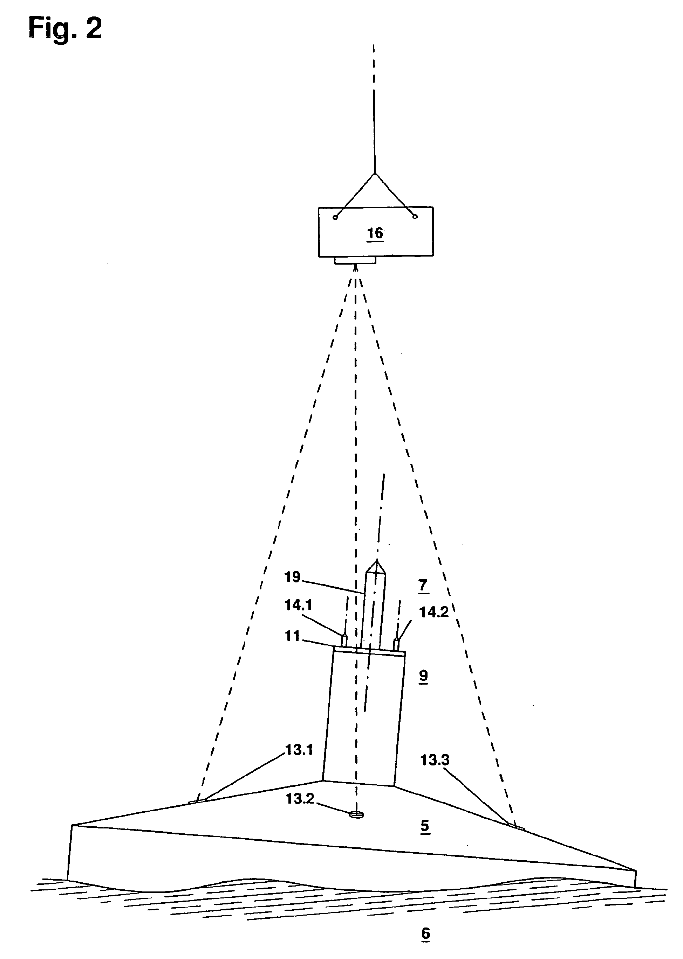

Zur Ausführung der individuellen Anpassung des Oberteils 8 der Kopplungsvorrichtung 7 wird zunächst die Gründungsstruktur 5 nach der Erstellung vermessen. Dieser Vorgang ist in Figur 2 gezeigt. Hierzu kann beispielsweise eine Messsonde 16 verwendet werden, die die Lage mehrerer, auf der Gründungsstruktur 5 angebrachter lagebekannter Messpunkte 13.1, 13.2, 13.3 bestimmt. Dabei kann ein optisches Messverfahren oder ein auf Triangulation beruhendes Messprinzip verwendet werden.

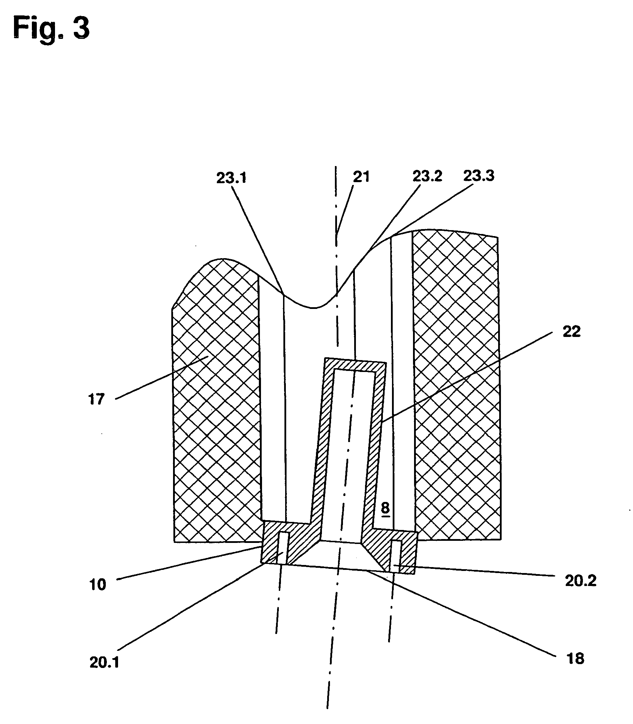

Für eine vorteilhafte Ausgestaltung der Erfindung ist das Oberteils 8 der Kopplungsvorrichtung, das dem Tragelement 2 zugeordnet ist, als Betonverbundteil 12 ausgestaltet. Dabei wird, ausgehend von der vermessenen Orientierung des Unterteils 9, die individuelle Anpassung durch ein Ausrichten eines ersten Kopplungskörpers 10 des Oberteils 8 in einer Schalung 17 mit einem nachfolgenden Umgießen mit Beton erreicht. Dieser Verfahrensschritt ist in Figur 3 dargestellt: Der erste Kopplungskörper 10 kann unterschiedlich gestaltet sein. Bezüglich der Materialwahl wird ein metallischer Werkstoff, der in einer Seewasserumgebung korrosionsbeständig ist, bevorzugt. Demnach kann beispielsweise Edelstahl oder Bronze gewählt werden. Entsprechend wird der zweite Kopplungskörper 11 am Unterteil 9 ausgelegt. Hierdurch können die bei der Installation und beim Betrieb der Anlage auf die Kopplungsvorrichtung 7 wirkenden Kräfte sowie die durch eine Relativwirkung der Einzelkomponenten bewirkte abrasive Wirkung sicher aufgefangen werden. Des Weiteren werden die eingeleiteten Punktlasten im Betonverbundteil 12 sicher verteilt, wobei die vorteilhafterweise vom ersten Kopplungskörper 10 oder vom zweiten Kopplungskörper 11 ausgehende Armierung in Kraftflussrichtung orientiert ist. Ferner können vom ersten Kopplungskörper 10 oder vom zweiten Kopplungskörper 11 im Einzelnen nicht dargestellte Zugelemente ausgehen, die die angrenzenden ausbetonierten Bereiche vorspannen.

Im Fall eines Standorts unter Wasser und insbesondere eines Installationsorts im Meer, wird zur Ausbildung des Oberteils 8 der Kopplungsvorrichtung 7 als Betonverbundteil ein Betonwerkstoff verwendet, der seewasserfest ist. Ferner wird ein faserverstärkter Beton bevorzugt, wobei als faserförmiger Zuschlag zum Beton Glas- oder Kohlenstofffasern oder Fasern aus Kunststoff oder Stahl verwendet werden. Des Weiteren können Additive als Korrosionsschutzmittel dem Beton zugegeben werden. Zusätzlich kann die Außenfläche der Betonteile mit einem Anstrich versiegelt werden. Außerdem sollten die hochbelasteten Betonteile vorgespannt werden. Hierzu ist in Figur 3 eine vom ersten Kopplungskörper 10 ausgehende Armierung ersichtlich. Des Weiteren können Zugstangen 23.1, 23.2, 23.3 vorgesehen sein, die bis zu im Einzelnen nicht dargestellten Spanntaschen am Tragelement 2 führen. Außerdem können wenigstens Teile des Tragelements 2 durch schwimmfähige Betonteile gebildet werden.

Für eine besonders vorteilhafte Ausgestaltung besteht das gesamte Tragelement 2 einschließlich der Maschinengondel 3 aus einem Betonverbundteil 12. Dies ermöglicht eine besonders kostengünstige Herstellung, wobei konstruktiv einheitliche Anlagen mit einer identischen Schalung für das Tragelement 2 hergestellt werden können und sich die Anpassung des Oberteils 8 der Kopplungsvorrichtung 7 ausschließlich auf die auf die jeweilige Gründungsstruktur 5 angepasste Orientierung des ersten Kopplungskörpers 10 innerhalb der Schalung 17 richtet.

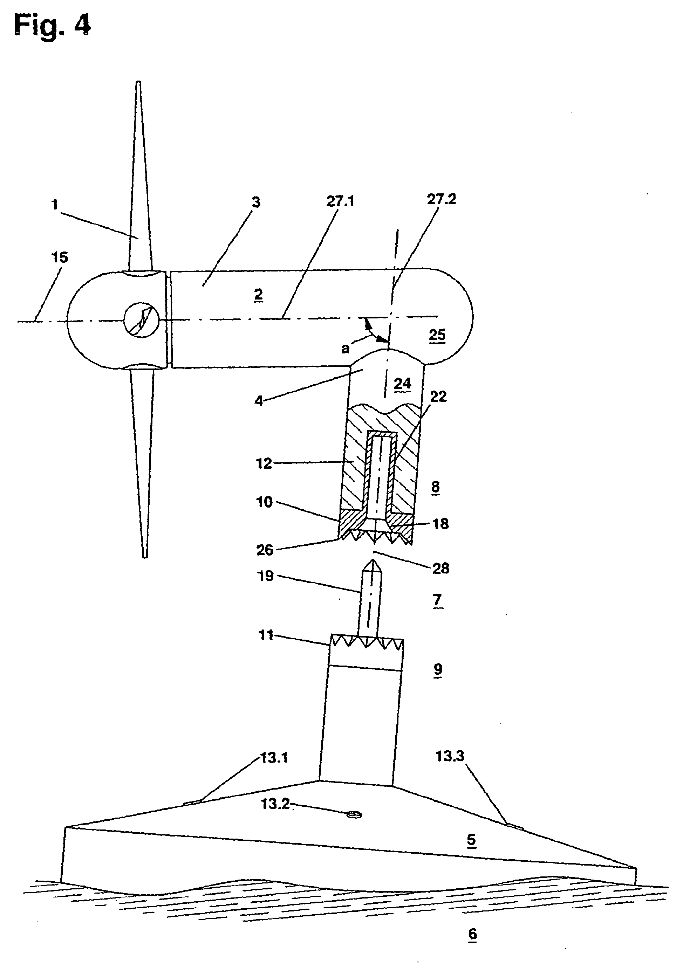

In Figur 4 ist eine alternative Ausgestaltung der Erfindung wiederum als teilangeschnittene Seitenansicht dargestellt. Dabei wird die individuelle Anpassung des Tragelements 2 nicht im Bereich der Kopplungsvorrichtung 7 vorgenommen. Stattdessen wird der Winkel a zwischen einer ersten Teilkomponente 24, vorliegend des oberen Stützpfeilerabschnitts 4, und einer zweiten Teilkomponente 25, für den dargestellten Fall die Maschinengondel 3, des Tragelements 2 an die Schrägstellung der Gründungsstruktur 5 angepasst. Dabei ist ersichtlich, dass die Längsachse 27.1 der zweiten Teilkomponente 25 einen Winkel a gegenüber der Längsachse 27.2 der ersten Teilkomponente 24 einnimmt, der kleiner als 90° ist, wobei die Winkeldifferenz zu 90° der Winkelabweichung zur Vertikalen des Zentrierungszapfens 19 am Unterteil 9 entspricht.

Zur konstruktiv einfachen und kostengünstigen Ausführung der Erfindungsvariante gemäß Figur 4 wird wenigstens die Verbindungsstelle zwischen der ersten Teilkomponente 24 und der zweiten Teilkomponente 25 als Betonverbundteil ausgeführt. Bevorzugt ist jedoch eine Ausführung des gesamten Tragelements 2 in Form eines Betonverbundteils. Für diesen Fall kann der erste Kopplungskörper 10 des Oberteils 8 der Kopplungsvorrichtung in gleichbleibender Orientierung in einem Schalungsteil eingesetzt werden, der gegenüber einem zweiten Schalungsteil zum Gießen der zweiten Komponente 25 eine individuell anpassbare Winkelstellung einnehmen kann. Dies ist im Einzelnen nicht in den Figuren dargestellt.

Des Weiteren zeigt Figur 4 eine konstruktiv vereinfachte Drehsicherung 26, für die eine Vielfachverzahnung am Oberteil 8 der Kopplungsvorrichtung 7 vorgesehen ist. Eine komplementäre Vielfachverzahnung liegt am Unterteil 9 vor. Hierdurch kann für die Installation das Tragelement 2 zunächst so gegenüber dem Zentrierungszapfen 19 ausgerichtet werden, dass dieser über den konischen Fangbereich 18 in die Zentrierungsbuchse 22 eintritt, sodass sich die Längsachse des Zentrierungszapfens 19 und die Längsachse 27.2 der zweiten Teilkomponente 25 überdecken. In diesem ersten Abschnitt der Installation kann das Tragelement 2 noch eine Drehbewegung um die Drehachse 28 ausführen, die mit der Längsachse des Zentrierungszapfens 19 zusammenfällt. Entsprechend kann aufgrund dieses Rotationsfreiheitsgrads eine Ausrichtung der Anlage gemäß der werkseitig über dem Winkel a angelegten individuellen Anpassung des Tragelements 2 vorgenommen werden. Für die vorgesehene Relativwinkelstellung zwischen Oberteil 8 und Unterteil 9 erfolgt dann das Absetzen des Tragelements 2 auf die Gründungsstruktur 5, sodass die Vielfachverzahnungen ineinandergreifen.

Zur Verfeinerung dieses Prinzips können in die Vielfachverzahnungen am Oberteil 8 und Unterteil 9 Asymmetrien eingebaut sein, sodass ein Einrasten nur in einer bestimmten Relativlage möglich ist. Weitere Ausgestaltungen verwenden zur Kopplung von Oberteil 8 und Unterteil 9 komplementär geformte, nach dem Schlüssel-/Schlossprinzip ineinandergreifende Teile. Des Weiteren können eine Paarung aus erstem Kopplungskörper 10 und zweitem Kopplungskörper 11 in Form eines Vielzahnzapfens und einer hierzu formschlüssigen Ausnehmung im Gegenstück oder andere formschlüssig ineinandergreifenden Komponenten vorgesehen sein. Des Weiteren ist es denkbar, die Funktion einer Parallelzentrierung von Oberteil 8 und Unterteil 9 und die Drehsicherung durch räumlich getrennte, separat angelegte Komponenten zu bewirken.

Weitere Ausgestaltungen der Erfindung im Rahmen der nachfolgenden Schutzansprüche sind denkbar. Dabei besteht die Möglichkeit, dass das Tragelement mehrere obere Stützpfeilerabschnitte 4 umfasst und mehrere Kopplungsvorrichtungen 7 vorliegen, sodass eine Vielzahl von Oberteilen 8 anlagenspezifisch anzupassen sind.

**Bezugszeichen**

| | |
|---|---|
| 1 | Turbine |
| 2 | Tragelement |
| 3 | Maschinengondel |
| 4 | oberer Stützpfeilerabschnitt |
| 5 | Gründungsstruktur |
| 6 | Gewässergrund |
| 7 | Kopplungsvorrichtung |
| 8 | Oberteil |
| 9 | Unterteil |
| 10 | erster Kopplungskörper |
| 11 | zweiter Kopplungskörper |
| 12 | Betonverbundteil |
| 13.1, 13.2, 13.3 | Messpunkt |
| 14.1, 14.2 | Sicherungselement |
| 15 | Rotationsachse |
| 16 | Messsonde |
| 17 | Schalung |
| 18 | konischer Fangbereich |
| 19 | Zentrierungszapfen |
| 20.1, 20.2 | Aufnahme |
| 21 | Vertikalrichtung |
| 22 | Zentrierungsbuchse |
| 23.1, 23.2, 23.3 | Zugstange |
| 24 | erste Teilkomponente |
| 25 | zweite Teilkomponente |
| 26 | Drehsicherung |
| 27.1,27.2 | Längsachse |
| 28 | Drehachse |

## Patentansprüche

1. Verfahren für die Errichtung eines Strömungskraftwerks mit
1.1 einer Turbine (1), die an einem Tragelement (2) umläuft; und
1.2 einer Gründungsstruktur (5), an der sich das Tragelement (2) an wenigstens einer Kopplungsvorrichtung (7) abstützt, wobei im montierten Zustand ein Oberteil (8) der Kopplungsvorrichtung (7), das Teil des Tragelements (2) ist, mit einem Unterteil (9) der Kopplungsvorrichtung (7), das Teil der Gründungsstruktur (5) ist, in Wirkverbindung steht; mit den folgenden Verfahrensschritten 1.3 Errichten der Gründungsstruktur (5) am Installationsort des Strömungskraftwerks;
1.4 Vermessen der Ausrichtung des Unterteils (9) der Kopplungsvorrichtung (7);
1.5 individuelle Anpassung des Tragelements (2) als Ganzes an die gemessene Ausrichtung des Unterteils (9) der Kopplungsvorrichtung (7); und
1.6 Absetzen des Tragelements (2) auf die Gründungsstruktur (5) und Herstellen einer Wirkverbindung zwischen dem Oberteil (8) der Kopplungsvorrichtung (7) und dem Unterteil (9) der Kopplungsvorrichtung (7).

2. Verfahren nach Anspruch 1, **dadurch gekennzeichnet, dass** zur Anpassung des Tragelements (2) an die gemessene Ausrichtung des Unterteils (9) der Kopplungsvorrichtung (7) das Oberteil (8) der Kopplungsvorrichtung (7) individuell angepasst wird.

3. Verfahren nach Anspruch 2, **dadurch gekennzeichnet, dass** das Oberteil (8) der Kopplungsvorrichtung (7) einen ersten Kopplungskörper (10) umfasst, der zur Anpassung des Tragelements (2) an die gemessene Ausrichtung des Unterteils (9) mit einer vorbestimmten Ausrichtung mit den weiteren Komponenten des Tragelements (2) verbunden wird.

4. Verfahren nach Anspruch 1, **dadurch gekennzeichnet, dass** das Tragelement (2) eine erste Teilkomponente (24) und eine zweite Teilkomponente (25) umfasst, die zum Oberteil (8) der Kopplungsvorrichtung (7) beabstandet sind und die zur individuellen Anpassung des Tragelements (2) so relativ zueinander orientiert werden, dass deren Längsachsen (27.1, 27.2) einen vorbestimmten Relativwinkel (a) einnehmen, wobei die Kopplungsvorrichtung (7) eine Drehsicherung (26) zur Festlegung der Winkelstellung des Oberteils (8) relativ zum Unterteil (9) bezogen auf eine Drehachse (28) der Kopplungsvorrichtung (7) umfasst

5. Verfahren nach Anspruch 4, **dadurch gekennzeichnet, dass** die Verbindung der ersten Teilkomponente (24) mit der zweiten Teilkomponente (25) des Tragelements (2) als Betonverbundteil (12) ausgebildet wird.

6. Verfahren nach Anspruch 3, **dadurch gekennzeichnet, dass** der erste Kopplungskörper (10) in ein Betonverbundteil (12) eingegossen wird.

7. Verfahren nach einem der Ansprüche 5 oder 6, **dadurch gekennzeichnet, dass** das gesamte Tragelement (2) als Betonverbundteil (12) ausgebildet wird.

8. Verfahren nach einem der Ansprüche 5-7, **dadurch gekennzeichnet, dass** das Betonverbundteil (12) aus seewasserfestem Beton hergestellt wird.

9. Verfahren nach einem der Ansprüche 5 - 8, **dadurch gekennzeichnet, dass** das Betonverbundteil (12) faserverstärkt wird.

10. Verfahren nach einem der Ansprüche 5 - 9, **dadurch gekennzeichnet, dass** das Betonverbundteil (12) vorgespannt wird.

11. Verfahren nach einem der vorausgehenden Ansprüche, **dadurch gekennzeichnet, dass** die Vermessen der Ausrichtung des Unterteils (9) der Kopplungsvorrichtung (7) mittels an der Gründungsstruktur (5) angebrachten, lagebekannten Messpunkten (13.1, 13.2, 13.3) ausgeführt wird.

## Claims

1. A method for erecting a tidal power plant, comprising
1.1 a turbine (1) which revolves on a carrying element (2), and
1.2 a foundation structure (5) on which the carrying element (2) rests on at least one coupling apparatus (7), with an upper part (8) of the coupling apparatus (7) which is part of the carrying element (2) being in operative connection in the mounted state with a bottom part (9) of the coupling apparatus (7) which is part of the foundation structure (5),
**characterized by** the following method steps:
1.3 erecting the foundation structure (5) at the place of installation of the tidal power plant;
1.4 measuring the orientation of the bottom part (9) of the coupling apparatus (7);
1.5 individual adjustment of the carrying element (2) in its entirety to the measured orientation of the bottom part (9) of the coupling apparatus (7), and
1.6 setting down the carrying element (2) on the foundation structure (5) and producing an operative connection between the upper part (8) of the coupling apparatus (7) and the bottom part (9) of the coupling apparatus (7).

2. A method according to claim 1, **characterized in that** the upper part (8) of the coupling apparatus (7) is individually adjusted for the adjustment of the carrying element (2) to the measured orientation of the bottom part (9) of the coupling apparatus (7).

3. A method according to claim 2, **characterized in that** the upper part (8) of the coupling apparatus (7) comprises a first coupling body (10) which is connected with a predetermined orientation with the further components of the carrying element (2) for the adjustment of the carrying element (2) to the measured orientation of the bottom part (9).

4. A method according to claim 1, **characterized in that** the carrying element (2) comprises a first partial component (24) and a second partial component (25) which are spaced from the upper part (8) of the coupling apparatus (7) and are oriented relative to one another for individual adjustment of the carrying element (2) in such a way that their longitudinal axes (27.1, 27.2) assume a predetermined relative angle (a), with the coupling apparatus (7) comprising an anti-rotation device (26) for fixing the angular position of the upper part (8) relative to the bottom part (9) relating to a rotational axis (28) of the coupling apparatus (7).

5. A method according to claim 4, **characterized in that** the connection of the first partial component (24) with the second partial component (25) of the carrying element (2) is arranged as a composite concrete part (12).

6. A tidal power plant according to claim 3, **characterized in that** the first coupling body (10) is cast into a composite concrete part (12).

7. A tidal power plant according to one of the claims 5 or 6, **characterized in that** the entire carrying element (2) is arranged as a composite concrete part (12).

8. A tidal power plant according to one of the claims 5 to 7, **characterized in that** the composite concrete part (12) is made of seawater-proof concrete.

9. A tidal power plant according to one of the claims 5 to 8, **characterized in that** the composite concrete part (12) is fiber-reinforced.

10. A tidal power plant according to one of the claims 5 to 9, **characterized in that** the composite concrete part (12) is pretensioned.

11. A tidal power plant according to one of the preceding claims, **characterized in that** the measurement of the orientation of the bottom part (9) of the coupling apparatus (7) is performed by means of measuring points (13.1, 13.2, 13.3) which are attached to the foundation structure (5) and whose positions are known.

## Revendications

1. Procédé de construction d'une centrale hydrocinétique comportant
1.1 une turbine (1) tournant sur un élément porteur (2); et
1.2 une structure de fondation (5) sur laquelle s'appuie l'élément porteur (2) sur au moins un dispositif d'accouplement (7), où une partie supérieure (8) du dispositif d'accouplement (7), une fois montée, faisant partie intégrante de l'élément porteur (2), est reliée fonctionnellement à une partie inférieure (9) du dispositif d'accouplement faisant partie intégrante de la structure de fondation (5);
comprenant les phases de procédé suivantes
1.3 construction de la structure de fondation (5) sur le lieu d'installation de la centrale hydrocinétique:
1.4 mesure de l'orientation de la partie inférieure (9) du dispositif d'accouplement (7);
1.5 adaptation individuelle de l'élément porteur (2) dans son ensemble à l'orientation mesurée de la partie inférieure (9) du dispositif d'accouplement (7):
1.6 pose de l'élément porteur (2) sur la structure de fondation (5) et établissement d'une relation fonctionnelle entre la partie supérieure (8) du dispositif d'accouplement (7) et la partie inférieure (9) du dispositif d'accouplement (7).

2. Procédé selon la revendication 1, **caractérisé en ce que** la partie supérieure (8) du dispositif d'accouplement (7) est adaptée individuellement pour adapter l'élément porteur (2) à l'orientation mesurée de la partie inférieure (9) du dispositif d'accouplement (7).

3. Procédé selon la revendication 2, **caractérisé en ce que** la partie supérieure (8) du dispositif d'accouplement (7) comprend un premier corps d'accouplement (10), qui est connecté aux autres composants de l'élément porteur (2) pour adapter l'élément porteur (2) à l'orientation mesurée de la partie inférieure (9) présentant une orientation prédéterminée.

4. Procédé selon la revendication 1, **caractérisé en ce que** l'élément porteur (2) comprend un premier sous-composant (24) et un second sous-composant (25), qui sont espacés de la partie supérieure (8) du dispositif d'accouplement (7) et sont orientés l'un par rapport à l'autre pour assurer l'adaptation individuelle de l'élément porteur (2) de telle sorte que leurs axes longitudinaux (27.1, 27.2) décrivent un angle relatif prédéterminé (a) où le dispositif d'accouplement (7) comprend un moyen de blocage en rotation (26) pour fixer la position angulaire de la partie supérieure (8) par rapport à la partie inférieure (9) rapportée à un axe de rotation (28) du dispositif d'accouplement (7).

5. Procédé selon la revendication 4, **caractérisé en ce que** la liaison du premier sous-composant (24) avec le second sous-composant (25) de l'élément porteur prend la forme d'une pièce composite en béton (12).

6. Procédé selon la revendication 3, **caractérisé en ce que** le premier corps d'accouplement (10) est coulé dans une pièce composite en béton (12).

7. Procédé selon l'une des revendications 5 ou 6, **caractérisé en ce que** l'ensemble de l'élément porteur (2) prend la forme d'une pièce composite en béton (12).

8. Procédé selon l'une quelconque des revendications 5-7, **caractérisé en ce que** la pièce composite en béton (12) est fabriquée en béton résistant à l'eau de mer.

9. Procédé selon l'une quelconque des revendications 5-8, **caractérisé en ce que** la pièce composite en béton (12) est renforcée de fibres.

10. Procédé selon l'une quelconque des revendications 5-9, **caractérisé en ce que** la pièce composite en béton (12) est précontrainte.

11. Procédé selon l'une quelconque des revendications précédentes, **caractérisé en ce que** la mesure de l'orientation de la partie inférieure (9) du dispositif d'accouplement (7) s'effectue au moyen de points de mesure (13.1, 13.2, 13.3) de position connue, prévus au niveau de la structure de fondation (5).
